# EUROPEAN PATENT SPECIFICATION

(11) **EP 3 506 098 B1**
(45) Date of publication and mention of the grant of the patent: **21.10.2020**
(21) Application number: 18210475.2
(22) Date of filing: 05.12.2018
(51) Int. Cl.: G06F 11/14

(54) **IMAGE FORMING APPARATUS, CONTROL METHOD THEREOF, AND RECORDING MEDIUM**
BILDERZEUGUNGSVORRICHTUNG, STEUERUNGSVERFAHREN DAFÜR UND AUFZEICHNUNGSMEDIUM
APPAREIL DE FORMATION D'IMAGES, SON PROCÉDÉ DE COMMANDE ET SUPPORT D'ENREGISTREMENT

(30) Priority: 26.12.2017 JP 2017249786
(43) Date of publication of application: 03.07.2019
(73) Proprietor: CANON KABUSHIKI KAISHA, Ohta-ku Tokyo 146-8501 (JP)
(72) Inventor: URAGAKI, Takeshi, Tokyo, 146-8501 (JP)
(74) Representative: WESER & Kollegen Patentanwälte PartmbB

(56) References cited:
- US-A1- 2007 086 022
- US-A1- 2008 244 057
- US-A1- 2011 134 459

## Description

### BACKGROUND OF THE INVENTION

### Field of the Invention

The present invention relates to an image forming apparatus, a control method thereof, and a recording medium.

### Description of the Related Art

In recent years, functions of an image forming apparatus such as a multifunction printer have become various, and many applications operate on an image forming apparatus in order to realize various functions. Pieces of data required when operating each application are various. For example, user setting data may be managed in a database included in an image forming apparatus. In addition, in a data area of each application, various data necessary for operating the application are stored and managed.

Since a storage device such'as an HDD that is widely used in order to store various data in an image forming apparatus is a consumable product, there may be cases where the store device breaks down in a case where a use period becomes long and there is a risk of data loss. As preparation for such a case, in many cases, the image forming apparatus has a function of taking out various data managed by the image forming apparatus at certain time points, backing up the various data, and restoring the backup data as necessary.

Japanese Patent Laid-Open No. 2011-180753 discloses an image forming apparatus that performs processing of excluding unnecessary data from a restore target according to a state of the image forming apparatus when restoring backup data.

Japanese Patent Laid-Open No. 2011-180753 describes that the backup data is set as data of the restore target in a case where an option to increase a storage capacity of the image forming apparatus is selected. In addition, Japanese Patent Laid-Open No. 2011-180753 describes that the backup data includes indispensable data specified by data identification information and only the indispensable data is set as the data of the restore target in a case the above option is not selected.

As described above, it is necessary to periodically back up data managed by an image forming apparatus. This is because, for example, there may be cases where all pieces of data are not able to be restored due to a breakdown of the storage device or the like and various data may be lost. However, the data managed by the image forming apparatus may include data that is able to be backed up during the operation of an application, such as user setting data, and data that is not able to be backed up during the operation of an application, such as application data.

Application data includes temporary data and the like at the time of activating the application. Therefore, the application data is not able to be backed up during the operation of an application and so the application data needs to be backed up in a state in which an operation is stopped. Therefore, it is not possible to execute backup of the application data simultaneously with the user setting data. However, in a case where the operation of an application is stopped in order to acquire various data managed by the image forming apparatus, the application is not able to be used, that is, a downtime occurs.

US 2011/0134459 A1 discloses an image forming apparatus with an address book management application which, if it receives a backup instruction, acquires address data from an address data storage area, creates a backup file therefrom, and stores the created backup file in a backup area of a HDD. US 2007/0086022 A1 discloses an image forming apparatus in which setting information can be backed up to a portable recording medium and/or restored from the portable recording medium to facilitate managing a plurality of image forming apparatuses. US 2008/0244057 A1 discloses a management server that transmits information representing a list of additional applications installable on an image forming apparatus to the image forming apparatus, and installs a requested application on the image forming apparatus if the management server has a license for the requested application and the application can be installed.

### SUMMARY OF THE INVENTION

The present invention provides an image forming apparatus capable of suppressing occurrences of downtimes when executing backup of the image forming apparatus.

The present invention in its first aspect provides an image forming apparatus as specified in the appended independent claim 1. The present invention in its second aspect provides a control method as specified in the appended independent claim 8. The present invention in its third aspect provides a computer program product as specified in the appended independent claim claim 9 and a storage medium as defined in the appended independent claim 10. Preferred embodiments of the invention are defined in the appended dependent claims.

Further features of the present invention will become apparent from the following description of exemplary embodiments with reference to the attached drawings.

### BRIEF DESCRIPTION OF THE DRAWINGS

Fig. 1 is a diagram illustrating an example of a hardware configuration of an image forming apparatus.
Fig. 2 is a diagram illustrating an example of a software configuration of the image forming apparatus.
Fig. 3 is a diagram illustrating an example of a backup setting screen of the image forming apparatus.
Fig. 4 is a flowchart for explaining a backup process.
Fig. 5 is a diagram illustrating the backup process of a data area of an extended application.
Fig. 6 is a flowchart for explaining a transmission process of backup data.
Fig. 7 is a diagram illustrating an example of a restore execution screen of the image forming apparatus.
Fig. 8 is a flowchart for explaining a restore process.
Fig. 9 is a diagram illustrating the restore process of the data area of the extended application.
Fig. 10 is a flowchart for explaining a transmission process of an execution result of the restore process.
Fig. 11 is a flowchart for explaining a backup process according to a second exemplary embodiment.
Fig. 12 is a flowchart for explaining a restore process according to the second exemplary embodiment.
Figs. 13A to 13D are examples of screens displayed in the backup process and the restore process.

### DESCRIPTION OF THE EMBODIMENTS

Hereinafter, an exemplary embodiment for implementing the present invention will be described with reference to the drawings and the like.

### (First exemplary embodiment)

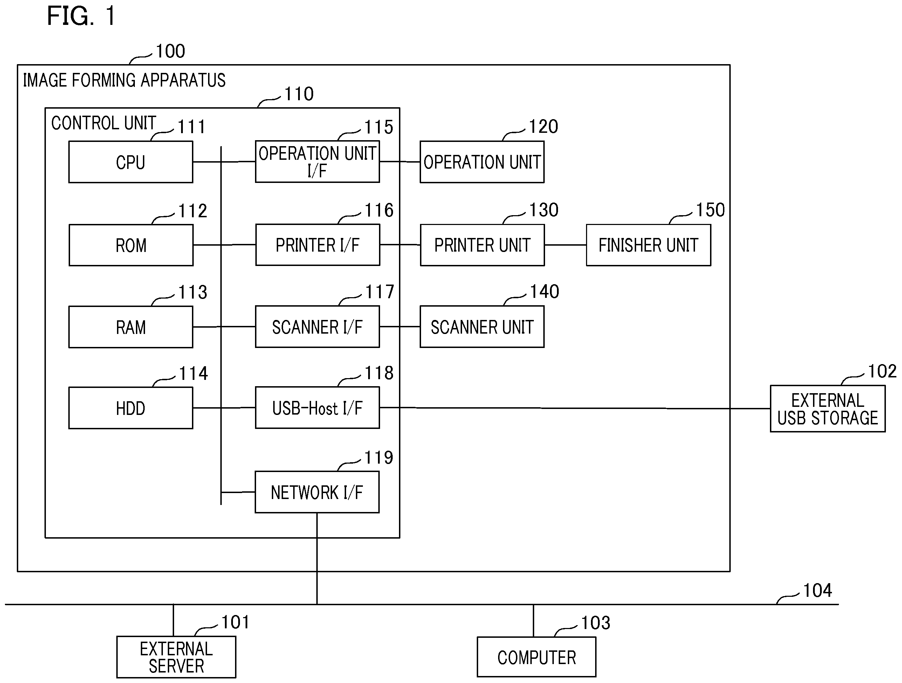

Fig. 1 is a diagram illustrating an example of an apparatus configuration of a system including an image forming apparatus of the present invention and a hardware configuration of the image forming apparatus.

In Fig. 1, an image forming apparatus 100, an external server 101, and a computer 103 are connected on a local area network (LAN) 104. In addition, the image forming apparatus 100 uses an external USB storage 102 that is a portable storage medium. Note that a plurality of image forming apparatuses 100 may be connected with the LAN 104.

The computer 103 is connected to the image forming apparatus 100 through the LAN 104, and is capable of transmitting print data, operating through a WEB browser, and the like with respect to the image forming apparatus 100. In addition, the image forming apparatus 100 and the computer 103 are connected to the external server 101 through the LAN 104, and are able to execute uploading and downloading of data. Protocols used by these communication units dealt here are not restricted, for example, HTTP, FTP, and other protocol can be used. The external server 101 is mainly present on the Internet, but the external server 101 may be present in an internal network. In addition, the external server 101 may be present as a cloud service.

In Fig. 1, the image forming apparatus 100 includes a control unit 110. The control unit 110 controls the overall operation of the image forming apparatus 100. The control unit 110 includes the following processing units in a configuration for controlling the image forming apparatus 100. A CPU 111 reads a control program stored in a ROM 112 to a RAM 113 and executes the control program. In addition to the control program, the ROM 112 stores apparatus information such as a license, apparatus configuration information, or a firmware version. A hard disk drive (HDD) 114 stores the print data received from the computer 103 through a network I/F 119.

Note that the program executed by the CPU 111 includes a printing application program. The print data stored in the HDD 114 is converted into image data that is able to be printed by a printer unit 130 by executing the printing application program. Then, the HDD 114 stores the image data that is able to be printed by the printer unit 130.

In addition, the program executed by the CPU 111 includes a scanning application program. The image data is read by a scanner unit 140 and the read image data is transmitted to the HDD 114 by executing the scanning application program. Then, the HDD 114 stores the read image data.

An operation unit I/F 115 is an interface for transferring an instruction input by a user of the image forming apparatus 100 to the CPU 111 through an operation unit 120. In addition, the operation unit I/F 115 receives processing details for switching a content displayed on the operation unit 120 from the CPU 111 and transfers the processing detail to the operation unit 120. Note that the operation unit 120 includes a liquid crystal display unit having a touch panel function, a keyboard, or the like, and receives an instruction from the user.

A printer I/F 116 is an interface for connecting the control unit 110 and the printer unit 130 to each other. The printer unit 130 prints the image data transmitted from the HDD 114 through the printer I/F 116 on a recording medium. A finisher unit 150 performs various finishing processes on the recording medium on which printing is performed by the printer unit 130. Finishing processes include, for example, a process of stapling sheets, a punching process (hole-forming process) of sheets, a saddle stitching binding process, and the like.

A scanner I/F 117 is an interface for connecting the control unit 110 and the scanner unit 140 with each other. The scanner unit 140 reads an image on a document by using a line sensor configured of a charge coupled device (CCD) or the like, generates image data, and inputs the image data to the control unit 110 through the scanner I/F 117.

The input image data is transmitted to the HDD 114. The image data transmitted to and stored in the HDD 114 is able to be printed by the printer unit 130. Thereby, the image on a document is able to be copied (duplicated) by reading the image data using the scanner unit 140 and printing the read image data using the printer unit 130.

A USB-Host I/F 118 is an interface for connecting the control unit 110 and the external USB storage 102 with each other. The USB-Host I/F 118 outputs the data stored in the HDD 114 to the external USB storage 102. In addition, the USB-Host I/F 118 inputs the data stored in the external USB storage 102 and notifies the input of the data to the CPU 111.

The external USB storage 102 is an external storage device that stores data and is able to be attached to and detached from the USB-Host I/F 118. A plurality of USB devices including the external USB storage 102 are able to be connected to the USB-Host I/F 118. An example of the external USB storage may include a USB memory, a USB keyboard, or the like. A network I/F 119 connects the control unit 110 (hence, the image forming apparatus 100) to the LAN 104. The network I/F 119 transmits image data or information to an external device on the LAN 104, or receives various kinds of information from the external device on the LAN 104.

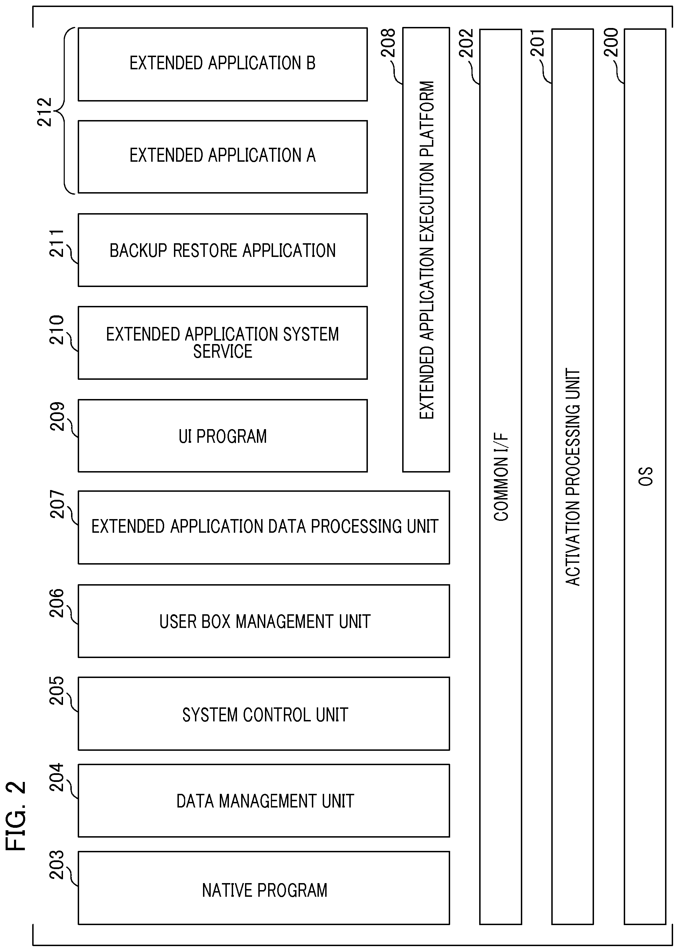

Fig. 2 is a diagram illustrating an example of a software configuration of the image forming apparatus 100.

Note that each configuration shown in Fig. 2 is realized by using computer program stored in the ROM 112 of Fig. 1 and executed by the CPU 111. An activation processing unit 201 that controls an activation sequence of each program included in the image forming apparatus 100 is operated on an OS 200. The programs activated by the activation processing unit 201 are able to call each other's functions by using a common I/F 202.

The programs activated by the activation processing unit 201 include a native program 203 that realizes each function of a printer, a facsimile, and a scanner, a data management unit 204 that performs management of various data, and a system control unit 205 that is a control program to control a power source and so on. In addition, the programs activated by the activation processing unit 201 include a user box management unit 206 that manages a user box function for a user to store personal data from the computer 103 or to store data scanned by the image forming apparatus 100, and the like.

In addition to these, an extended application execution platform 208 that is an execution platform of an extended application 212 to which a user adds a program later as necessary is operated on the OS 200. The extended application execution platform 208 includes a Java VM that is operated on the OS 200. The extended application execution platform 208 includes the Java VM and a library group and execution environment that is operated on a VM.

In addition, a framework for managing the extended application 212 is installed on the extended application execution platform 208. A UI program 209 for displaying an operation screen necessary for using the image forming apparatus 100 is operated on the extended application execution platform 208. Part or all of reference numerals 201 to 202 are an example of system software.

In addition, a backup restore application 211 that realizes backup and restore functions of various data of the image forming apparatus 100 is operated on the extended application execution platform 208. Furthermore, in addition to the extended application 212, an extended application system service 210 that manages the extended application 212, or the like is operated on the extended application execution platform 208.

An extended application data processing unit 207 executes backup and restoration of a data area where the extended application execution platform 208 is operated. The extended application data processing unit 207 is able to execute not only backup of the entire data area but also backup of only a part of the data area. In the present exemplary embodiment, a case where the backup and restoration of the entire data area is executed will be described.

The data management unit 204 performs backup and restoration of the various data managed by the image forming apparatus 100. Specifically, the data management unit 204 performs backup and restoration of a first data area which is a data area excluding a second data area for the extended application execution platform 208 that will be described later. For example, user setting data or directory information managed by the user box management unit 206 is stored in the first data area.

The data management unit 204 is able to perform acquisition of the directory information managed by the user box management unit 206 and creation of a new directory by accessing the user box management unit 206.

In addition, the data management unit 204 instructs the extended application data processing unit 207 to access the second data area including the data area of each extended application 212 and executes the backup and restoration of the second data area. In the second data area, data necessary for operating the extended application execution platform 208 and each extended application 212 is stored.

For example, the second data area stores each extended application 212 itself and setting data of each extended application 212, and so the second data area is a data area in which it is not possible to acquire backup data in a case where any application is operating. In the present exemplary embodiment, the first data area is set as all data areas except for the second data area.

The extended application data processing unit 207 receives the instruction of the data management unit 204 and then acquires all the backup data of the second data area. However, the present invention is not limited thereto, and it is also possible to acquire a backup only in an area of a specific extended application 212.

The backup restore application 211 starts operation according to a set time of the user and instructs the data management unit 204 to execute the backup and restoration through the common I/F. The extended application system service 210 is a utility library that is commonly useful for the extended applications 212 and is provided from the system.

The extended application system service 210 requests the extended application execution platform 208 to install, uninstall, activate, stop, and the like the extended application 212. It is possible to reduce problems in developing the extended application 212 by calling a function of the extended application system service 210 from the extended application 212.

The extended application 212 is able to access each function of the image forming apparatus 100 such as another extended application 212 or the RAM 113 only through the extended application execution platform 208 or the extended application system service 210. In addition, the extended application 212 having a user interface (UI) displays an icon on a main menu screen displayed on the operation unit 120 of the image forming apparatus 100.

In a case where the operation unit I/F 115 detects that the user selects the icon through the operation unit 120, the operation unit I/F 115 transmits the fact that the user has selected the icon to the CPU 111. In a case where the CPU 111 receives the fact that the user has selected the icon from the operation unit I/F 115, the CPU 111 displays the UI of the selected extended application 212 on the operation unit 120.

Note that, the software configuration shown in FIG. 2 describes only a basic part of the software included in the image forming apparatus 100, and other services and the like may be included in an execution environment. For example, in FIG. 2, an extended application A and an extended application B are shown as an example of the extended application 212, but the present invention is not limited thereto, and the image forming apparatus 100 may have one or a plurality of extended applications 212. In addition, the image forming apparatus 100 may not include unnecessary software and services for reasons such as limiting the setting of the image forming apparatus 100.

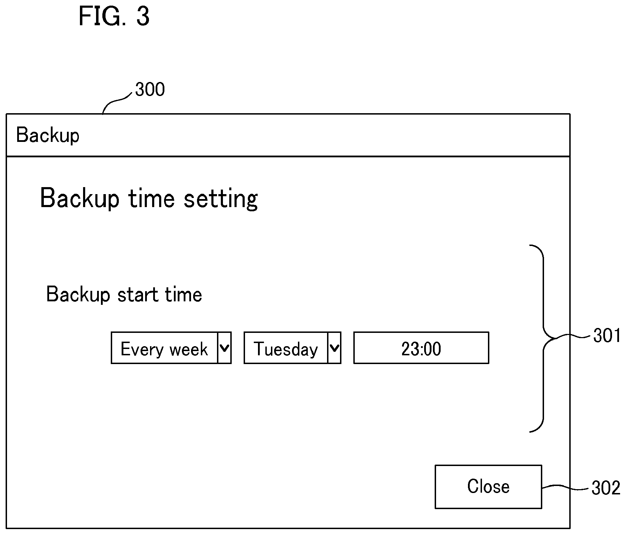

Fig. 3 is an example of a backup setting screen 300 displayed on the operation unit 120 by the backup restore application 211.

The backup setting screen 300 has a backup start time setting section 301, and receives designation of a backup start time (an execution time) from the user. In a case where a close button 302 is pressed, the operation unit 120 closes the backup setting screen 300 and transits to the main menu of the image forming apparatus 100.

Note that, in the present exemplary embodiment, the execution time of the backup is set. However, the present invention is not limited thereto. For example, the backup may be set to be executed at the time of a specific event, such as at the time of execution of a firmware update. In addition, for example, a button for immediate execution of the backup may be provided.

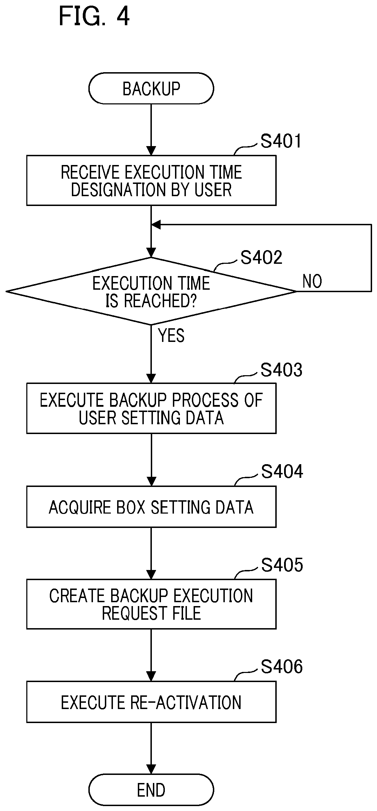

Next, a data backup process performed by the image forming apparatus 100 will be described with reference to Figs. 4 to 6.

Fig. 4 is a flowchart for explaining a backup process of the image forming apparatus 100.

In step S401, the backup restore application 211 receives the designation of the backup start time from the user using the backup setting screen 300 (Fig. 3).

In step S402, the backup restore application 211 waits until the backup start time designated by the user is reached. In a case where the backup start time designated by the user is reached, the process proceeds to step S403. In step S403, the backup restore application 211 notifies the data management unit 204 and causes the data management unit 204 to execute the backup of the user setting data.

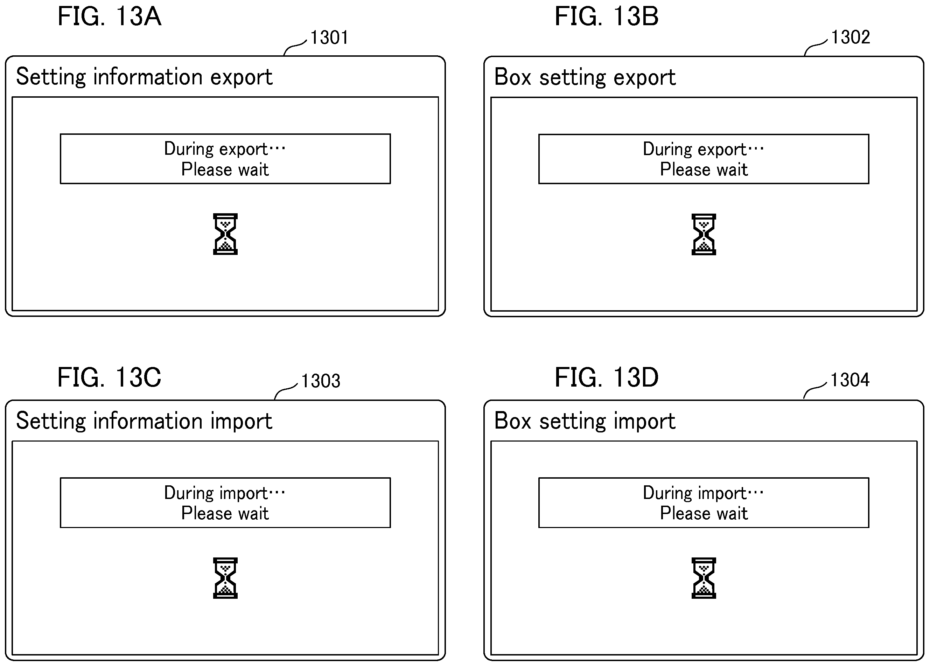

During the backup of the user setting data, since data is not able to be rewritten, a screen is covered so that user operation is not able to be performed. For example, as shown in Fig. 13A, a screen 1301 indicating that the user setting data is being exported is displayed on the operation unit 120 and an alert is issued. While the screen 1301 is being displayed, the image forming apparatus 100 does not receive an operation from the user.

In step S404, the backup restore application 211 notifies the user box management unit 206 and acquires the management directory information of the user box. During the acquisition of the management directory information, as shown in Fig. 13B, a screen 1302 indicating that the box setting is being exported is displayed on the operation unit 120. While the screen 1302 is being displayed, the image forming apparatus 100 does not receive an operation from the user.

As described above, in the present exemplary embodiment, the backup data of the user setting data and the management directory information of the user box are acquired in a state in which various applications of the image forming apparatus 100 are activated without stopping the various applications of the image forming apparatus 100. Note that, in the present exemplary embodiment, although the user setting data and the management directory information of the user box are exemplified as the backup data acquired in the state in which the various applications are activated, the present invention is not limited thereto. Backup of arbitrary data of the first data area, that is the backup of the data of the data area except for the second data area that is the data area of the extended application execution platform, may be set to be acquired.

In step S405, the backup restore application 211 creates a backup execution request file. The backup execution request file is used to back up the second data area including the data area of each extended application 212. Since the data area of each extended application 212 is not able to be backed up during the operation of the extended application 212, in the present exemplary embodiment, the backup is executed at the time of activating the image forming apparatus.

Therefore, the backup restore application 211 creates the backup execution request file. At the time of the activation of the image forming apparatus, the extended application data processing unit 207 determines the necessity of backup on the basis of the backup execution request file. Specifically, in a case where the backup execution request file is present in a predetermined place, it is determined that backup of the second data area is necessary. In other words, the backup execution request file is a file that causes a process of acquiring the backup data.

Note that, in the present exemplary embodiment, a case where the execution of the backup is caused by creating a file such as the backup execution request file has been described, but the present invention is not limited thereto. That is, in step S405, information (first information) causing the process of acquiring the backup data of the second data area including the data area of the extended application 212 may be created.

For example, the information causing the process of the backup data may be created as flag information developed on a memory such as the RAM 113, or other static data may be created. In step S406, the backup restore application 211 instructs the system control unit 205 to re-activate the image forming apparatus 100 in order to back up the data area of the extended application.

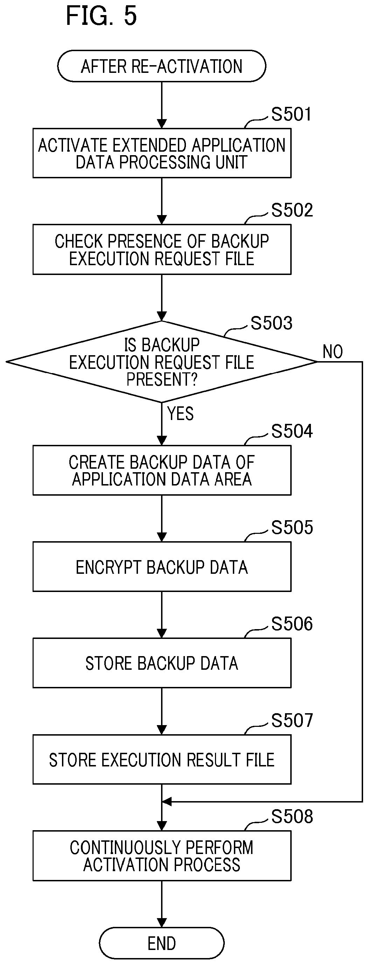

Fig. 5 is a flowchart for explaining the backup process of the data area of the extended application 212 executed by the extended application data processing unit 207 during the activation process of the image forming apparatus is progressed.

In step S501, the activation processing unit 201 activates the extended application data processing unit 207 during the activation process of the image forming apparatus 100 is progressed. The activation of the extended application data processing unit 207 is executed prior to the activation of the extended application execution platform 208.

In step S502, the extended application data processing unit 207 checks whether the backup execution request file is present in the predetermined place. In step S503, the extended application data processing unit 207 determines whether or not the backup execution request file is present, and in a case where the backup execution request file is present, the process proceeds to step S504.

Note that, in a case where the file is not present, the extended application data processing unit 207 determines that the backup process of the data area of the extended application is unnecessary, and the process proceeds to step S508. In step S508, the activation processing unit 201 continues a normal activation process of the image forming apparatus 100.

In step S504, the extended application data processing unit 207 acquires the backup data of the data area of the extended application. Specifically, one file obtained by compressing the entire data area of the extended application execution platform 208 including each extended application and the setting data of each extended application is acquired as the backup data. Note that, as a method of creating the backup data, all the data of the data area of the extended application may be simply copied, or the backup data obtained by filtering only necessary data with using an extension or the like may be acquired.

In step S505, the extended application data processing unit 207 encrypts the data acquired in step S504. By performing encryption, it become possible to reduce a risk of the backup data being read even in a case where the backup data is acquired by a third party. In step S506, the extended application data processing unit 207 stores the backup data in the HDD 114. Note that, the storage destination is not limited to the HDD 114, but may be the RAM 113, or may be an external storage connected to the image forming apparatus 100, such as a USB memory.

In step S507, the extended application data processing unit 207 creates an execution result file in order to notify an execution result of the backup process to the backup restore application 211. Note that, in the present exemplary embodiment, a file such as the execution result file is created and stored to notify the execution result, but the present invention is not limited thereto. For example, the notification of the execution result may be managed by the flag information stored in the memory such as the RAM 113, or for example, the notification of the execution result may be managed as a setting value stored by the data management unit 204.

In step S508, the activation processing unit 201 executes an activation process of programs related to other various functions and the like by receiving completion of the backup of the data area of the extended application. Note that the activation process of the extended application execution platform 208 is performed in step S508 and the backup restore application 211 is activated.

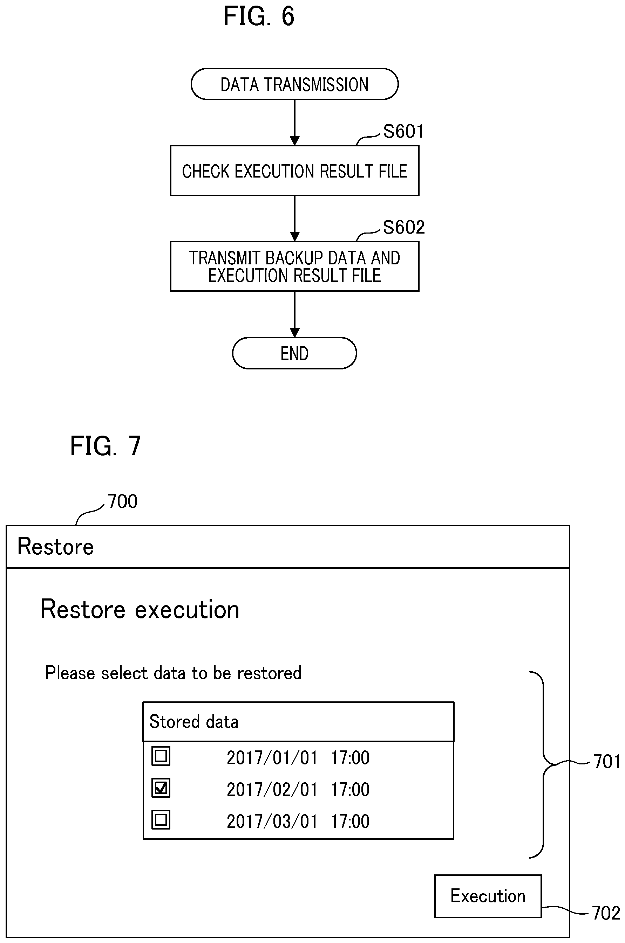

Fig. 6 is a flowchart for explaining a transmission process of the backup data of the backup restore application 211.

Note that, since the present process is executed in the background, the present process does not affect a use of the image forming apparatus 100 of the user.

In step S601, the backup restore application 211 activated in step S508 checks the execution result file created in step S507. The backup restore application 211 decides whether the backup process of the various data managed by the image forming apparatus 100 has been executed successfully or not by using the execution result file, and in a case where it is determined that the process has been executed successfully, the backup restore application 211 executes a process of step S602.

In step S602, the backup restore application 211 transmits the execution result file and the backup data to the external server 101. Note that the transmission destination is not limited to the external server 101. For example, the transmission destination of the backup data may be an external storage connected to the image forming apparatus 100, for example, a USB memory, or may be the HDD 114 in the image forming apparatus 100.

Note that, in a case where the backup restore application 211 determines that the backup process of the data area of the extended application has failed on the basis of the execution result file, the backup restore application 211 transmits only the execution result file to the external server 101 and ends the process of step S602. The success or failure of the backup process is determined for each backup target. In a case where even one backup fails, it may be determined that the backup has failed. In addition, in a case where even one backup is successful, it may be determined that the backup is successful and a transmission process of the successful backup data may be performed.

Next, a method of restoring the backup data will be described with reference to Figs. 7 to 10.

Fig. 7 is an example of a restore execution screen 700 displayed on the operation unit 120 by the backup restore application 211.

The restore execution screen 700 includes a data selection section 701 that causes the user to select data to be restored in the backup data acquired by the backup process executed in the past. In a case where the user finishes the selection and a restore execution button 702 is pressed, a restore process is started.

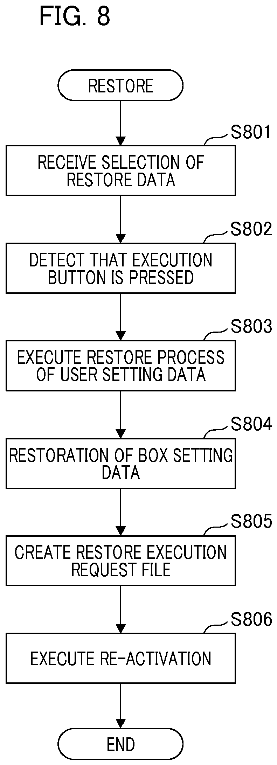

Fig. 8 is a flowchart for explaining the restore process of the image forming apparatus 100 executed by the data management unit 204 and the backup restore application 211.

In step S801, the backup restore application 211 receives the selection of the data to be restored by the operation of the user using the restore execution screen 700 (Fig. 7). In the data selection section 701 of the restore execution screen 700, the backup data of the user stored in the external server 101 is displayed as a selection target.

In step S802, the backup restore application 211 detects that the user has pressed the restore execution button 702 on the restore execution screen 700. Then, the backup restore application 211 acquires the backup data selected by the user, and stores the backup data in an arbitrary area, for example, the HDD 114, in the image forming apparatus 100.

In step S803, the backup restore application 211 notifies the data management unit 204 and causes the data management unit 204 to execute the restore process of the user setting data. During the restoration of the user setting data, similarly to during the execution of the backup process, a screen is covered so that user operation is not able to be performed. For example, as shown in Fig. 13C, a screen 1303 indicating that the setting data is being imported (being restored) is displayed on the operation unit 120. While the screen 1303 is being displayed, the image forming apparatus 100 does not receive an operation from the user.

In step S804, the backup restore application 211 notifies the user box management unit 206 and executes the restoration of the data of the user box. In the restoration of the data of the user box, the user box management unit 206 creates the user directory on the basis of the restore data. During the creation of the user directory, as shown in Fig. 13D, the user box management unit 206 displays a screen 1304 indicating that the box setting is being imported on the operation unit 120. While the screen 1304 is being displayed, the image forming apparatus 100 does not receive an operation from the user.

As described above, in the present exemplary embodiment, the restoration of the user setting data and the management directory information of the user box is executed in a state in which various applications of the image forming apparatus 100 are activated without stopping the various applications of the image forming apparatus 100. Note that, in the present exemplary embodiment, although the user setting data and the management directory information of the user box are exemplified as the backup data on which the restoration is performed in the state in which various applications are activated, the present invention is not limited thereto. Similarly to the backup process, restoration of arbitrary backup data of the first data area, which is the data area except for the second data area that is the data area of the extended application execution platform, may be set to be executed.

In step S805, the backup restore application 211 creates a restore execution request file. The restore execution request file is used to restore the data area of the extended application. Since the data area of the extended application is not able to be restored during the operation of the extended application similarly to the backup process, in the present exemplary embodiment, the restoration is executed at the time of activating the image forming apparatus.

Therefore, the backup restore application 211 creates the restore execution request file. At the time of the activation of the image forming apparatus, the extended application data processing unit 207 determines whether or not the restoration should be executed on the basis of the restore execution request file. Specifically, in a case where the restore execution request file is present in a predetermined place, it is determined that the restoration of the backup data of the second data area is necessary. In other words, the restore execution request file is a file that causes a process of executing the restoration.

Note that, in the present exemplary embodiment, a case where the execution of the restoration is caused by creating a file such as the restore execution request file has been described, but the present invention is not limited thereto similarly to the backup process. That is, in step S805, information (second information) causing the process of executing the restoration of the backup data of the second data area may be created.

In step S806, the backup restore application 211 instructs the system control unit 205 to re-activate the image forming apparatus 100 in order to restore the data area of the extended application.

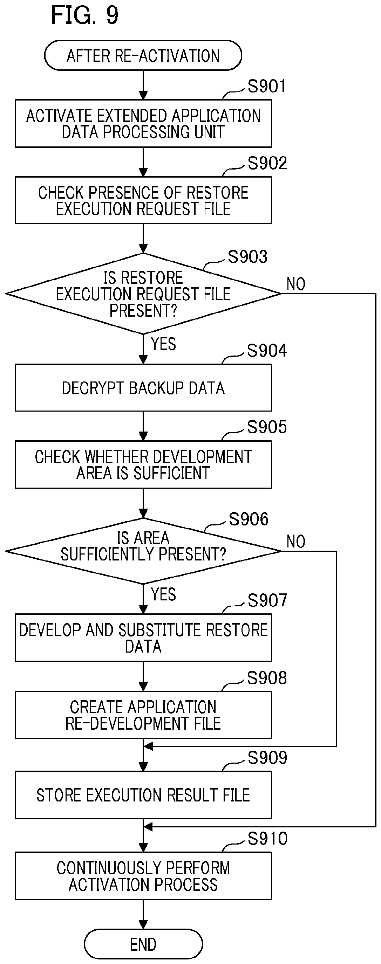

Fig. 9 is a flowchart for explaining the restore process of the data area of the extended application executed by the extended application data processing unit 207 during the activation process of the image forming apparatus.

In step S901, the activation processing unit 201 activates the extended application data processing unit 207 in the activation process of the image forming apparatus 100.

In step S902, the extended application data processing unit 207 checks whether the restore execution request file is present in the predetermined place. In step S903, the extended application data processing unit 207 determines the checking result whether or not the restore execution request file is present, and in a case where the file is present, the process proceeds to step S904.

Note that, in a case where the file is not present, the extended application data processing unit 207 determines that the restore process of the data area of the extended application is unnecessary, and the process proceeds to step S910. In step S910, the activation processing unit 201 continues a normal activation process of the image forming apparatus 100.

In step S904, the extended application data processing unit 207 decrypts the encrypted backup data of the restore target. In step S905, the extended application data processing unit 207 checks the backup data of the restore target decrypted in step S904, and checks whether or not a sufficient development area is able to be secured. In a case where the extended application data processing unit 207 determines a sufficient development area is able to be secured in step S906, the process proceeds to step S907, and in a case where the extended application data processing unit 207 determines a sufficient development area is not able to be secured in step S906, the restore process is stopped, and the process proceeds to step S909.

In step S907, the backup data of the restore target is developed, and the developed data is substituted with the existing data. In step S908, a development instruction is performed to develop each extended application 212 again from an archive file of the extended application stored in the image forming apparatus 100. Therefore, even in a case where there is a gap between the extended application at the time of the backup and the extended application at the time of the restoration, the extended application is able to be activated without any problem.

In step S909, the extended application data processing unit 207 creates an execution result file similarly to the backup process in order to notify an execution result of the restore process to the backup restore application 211. In step S910, the activation processing unit 201 executes the activation process of the image forming apparatus 100 by receiving completion of the restoration of the data area of the extended application. Note that, similarly to step S508, the activation process of the extended application execution platform 208 is performed in step S910 and the backup restore application 211 is activated.

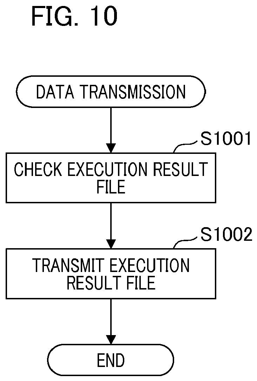

Fig. 10 is a flowchart for explaining a transmission process of the execution result of the restore process executed by the backup restore application 211.

In step S1001, the backup restore application 211 activated in step S910 checks the execution result file created in step S909. In step S1002, the backup restore application 211 transmits the execution result file to the external server 101. Note that the transmission destination is not limited to the external server 101 similarly to the backup process.

As described above, according to the present exemplary embodiment, it is possible to execute backup and restoration of various data stored in the image forming apparatus at an appropriate timing and to suppress downtime related to the backup and the restoration.

### (Second exemplary embodiment)

In the first exemplary embodiment, the re-activation of the image forming apparatus 100 is executed in order to back up the data area of the extended application, and the backup data is acquired during the activation process. Therefore, it is possible to perform the backup of the data area in a state in which the extended application is stopped before the extended application is activated. On the other hand, in the present exemplary embodiment, a case where only the extended application execution platform 208 is stopped and the backup data is acquired rather than re-activating the image forming apparatus 100 will be described.

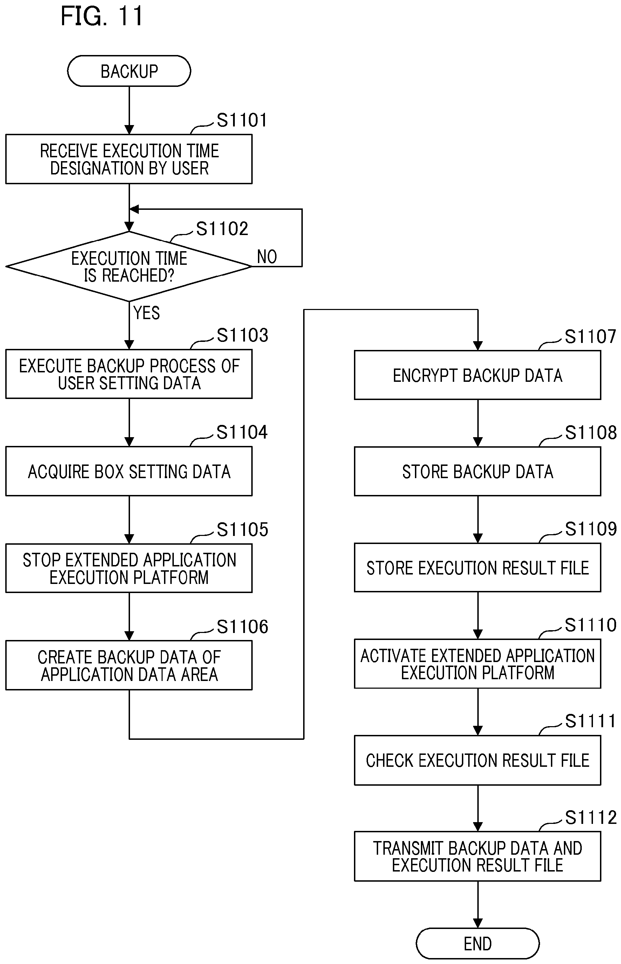

Fig. 11 is a flowchart for explaining the backup process according to the present exemplary embodiment.

Since processes of steps S1101 to S1104 are similar to the processes of steps S401 to S404 of the backup process (Fig. 4) according to the first exemplary embodiment, descriptions thereof will be omitted.

In step S1105, the data management unit 204 instructs the activation processing unit 201 to stop the extended application execution platform 208.

The activation processing unit 201 stops the extended application execution platform 208 by receiving the instruction. The extended application execution platform 208 stops also itself after stopping all the extended applications 212 that is being activated.

Since processes of steps S1106 to S1109 are similar to the processes of steps S504 to S507 of the backup process (Fig. 5) of the data area of the extended application according to the first exemplary embodiment, descriptions thereof will be omitted. In step S1110, the data management unit 204 instructs the activation processing unit 201 to activate the extended application execution platform 208 by receiving completion of the backup of the data area of the extended application.

The activation processing unit 201 activates the extended application execution platform 208 by receiving the instruction. After the extended application execution platform 208 is activated, the extended application execution platform 208 sequentially activates the extended applications 212 that are stopped in step S1105. Since processes of steps S1111 and S1112 are similar to the processes of steps S601 and S602 of the transmission process (Fig. 6) of the backup data in the first exemplary embodiment, descriptions thereof will be omitted.

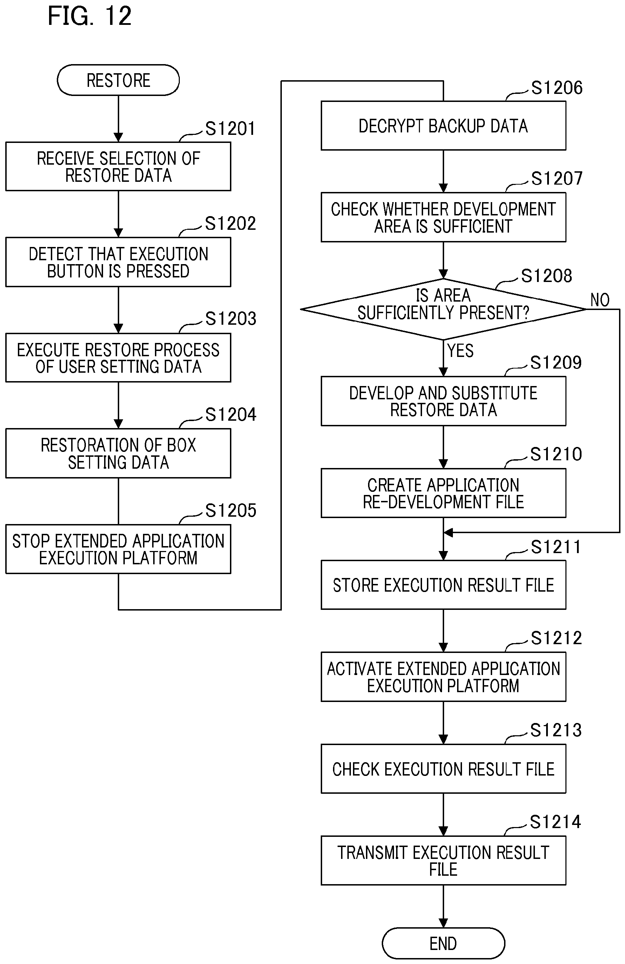

Fig. 12 is a flowchart for explaining the restore process according to the present exemplary embodiment.

Since processes of steps S1201 to S1204 are similar to the processes of steps S801 to S804 of the restore process (Fig. 8) according to the first exemplary embodiment, descriptions thereof will be omitted. In step S1205, the data management unit 204 instructs the activation processing unit 201 to stop the extended application execution platform 208.

The activation processing unit 201 stops the extended application execution platform 208 by receiving the instruction. The extended application execution platform 208 also stops itself after stopping all the extended applications 212 that is being activated.

Since processes of steps S1206 to S1211 are similar to the processes of steps S904 to S909 of the restore process (Fig. 9) of the data area of the extended application according to the first exemplary embodiment, descriptions thereof will be omitted. In step S1212, the data management unit 204 instructs the activation processing unit 201 to activate the extended application execution platform 208 by receiving completion of the restoration of the data area of the extended application.

The activation processing unit 201 activates the extended application execution platform 208 by receiving the instruction. After the extended application execution platform 208 is activated, the extended application execution platform 208 sequentially activates the extended applications 212 that are stopped in step S1205. Since processes of steps S1213 and S1214 are similar to the processes of steps S1001 and S1002 of the transmission process (Fig. 10) of the execution result of the restore process in the first exemplary embodiment, descriptions thereof will be omitted.

As described above, according to the present exemplary embodiment, the same effects as those of the first exemplary embodiment can be obtained. In addition, in the present exemplary embodiment, since the backup of the data area of the extended application is able to be executed without the re-activation of the image forming apparatus 100, it is possible to minimize downtime of the image forming apparatus 100 to the user.

Note that, in the first exemplary embodiment and the second exemplary embodiment, the example in which the backup restore application instructs the backup, transmits the acquired backup data to the external server, and manages the backup data is described, but the present invention is not limited thereto. For example, the backup may be instructed from a native application of the image forming apparatus. In addition, the instruction of the backup may be received from the external system.

In addition, the storage destination of the backup data may be not an external server but an external USB storage connected to the image forming apparatus or an HDD in the image forming apparatus. In addition, it is possible to arbitrarily combine the backup process and the restore process according to the first exemplary embodiment with the backup process and the restore process according to the second exemplary embodiment.

For example, it is assumed that the backup of the data area of the extended application execution platform is executed during the re-activation process of the image forming apparatus. Even in this case, when restoring the backup data, the extended application execution platform may be stopped and the restore process may be executed without the re-activation of the image forming apparatus.

In addition, for example, it is assumed that the extended application execution platform is stopped and the backup of the data area of the extended application execution platform is executed. Even in this case, when restoring the backup data, the restore process may be executed during the re-activation process of the image forming apparatus.

### (Other Embodiments)

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments.

## Claims

1. An image forming apparatus (100) provided with an operating system (200) for operating an extended application execution platform (208) to execute extended applications (212) that were added to the extended application execution platform (208), wherein a first extended application is an application that can be added to the extended application execution platform to provide a function to the image forming apparatus and a second extended application is an application that can be added to the extended application execution platform to provide a function to the image forming apparatus, the image forming apparatus (100) comprising:
a storage (114) to store information; and
a control unit (111, 204, 207) configured to acquire backup data of the first extended application and the second extended application;
**characterized in that**
the storage (114) comprises a first data area where the data of the first extended application itself is stored, and a second data area where the second extended application itself is stored; and
the control unit (207) causes a re-activation (S406) of the image forming apparatus which involves a state in which the extended application execution platform is not activated, or alternatively a stop (S1105) of the extended application execution platform so as to bring about the state in which the extended application execution platform is not activated; and
the control unit (207) is adapted to acquire (S504, S1106) the backup data of the first data area and the second data area on the basis of detection (S503) of information that instructs backup of extended application of a plurality of types including the first extended application and the second extended application in the state in which the extended application execution platform is not activated.

2. The image forming apparatus according to claim 1, wherein:
upon re-activation of the image forming apparatus, the control unit detects whether or not the information that instructs backup of extended application has been created, acquires the backup data of the first data area and the second data area in a case of detection of the information that instructs backup of extended application, and activates the extended application execution platform thereafter, and
the extended application execution platform is configured to activate, after having been activated itself, each of the plurality of extended applications added to the extended application execution platform.

3. The image forming apparatus according to claim 2, wherein:
upon said stop of the extended application execution platform, the control unit detects whether or not the information that instructs backup of extended application has been created, acquires the backup data of the first data area and the second data area in a case of detection of the information that instructs backup of extended application, and activates the extended application execution platform thereafter, and
the extended application execution platform is configured to activate, after having been activated itself, each of the plurality of extended applications added to the extended application execution platform.

4. The image forming apparatus according to claim 1, wherein:
a backup restore application performs the restore function by creating information that instructs the control unit to restore the backup data of the extended application of a plurality of types including the first extended application and the second extended application, and
to cause a re-activation (S806) of the image forming apparatus which involves the state in which the extended application execution platform is not activated, or alternatively a stop (S1105) of the extended application execution platform so as to bring about the state in which the extended application execution platform is not activated; and
the control unit is adapted to restore the backup data of the first data area and the second data area on the basis of detection (S903) of the information that instructs restoring the backup data of the extended application in the state in which the extended application execution platform is not activated.

5. The image forming apparatus according to claim 4, wherein:
upon re-activation of the image forming apparatus, the control unit detects whether or not the information that instructs restoring the backup data of the extended application has been created, restores the backup data of the first data area to the first data area and the second data area to the second data area in a case of detection of the information that instructs restoring the backup data of the extended application, and activates the extended application execution platform thereafter, and
the extended application execution platform is configured to activate, after having been activated itself, each of the plurality of extended applications added to the extended application execution platform.

6. The image forming apparatus according to claim 4, wherein:
upon said stop of the extended application execution platform, the control unit detects whether or not the information that instructs restoring the backup data of the extended application has been created, restores the backup data of the first data area and the second data area in a case of detection of the information that instructs restoring the backup data of the extended application, and activates the extended application execution platform thereafter, and
the extended application execution platform is configured to activate, after having been activated itself, each of the plurality of extended applications added to the extended application execution platform.

7. The image forming apparatus according to claim 3, further comprising:
a transmission unit configured to execute transmission of the acquired backup data of the first and second data areas and an execution result of the backup,
wherein the transmission unit executes the transmission after the extended application execution platform and the extended application are activated.

8. A controlling method of an image forming apparatus provided with an operating system for operating an extended application execution platform to execute extended applications that were added to the extended application execution platform, wherein a first extended application is an application that can be added to the extended application execution platform to provide a function to the image forming apparatus and a second extended application is an application that can be added to the extended application execution platform to provide a function to the image forming apparatus, and comprising a storage that stores information, the controlling method comprising:
acquiring backup data of the first extended application and the second extended application;
**characterized in that**
the storage comprises a first data area where the data of the first extended application itself is stored, and a second data area where the second extended application itself is stored; and by
causing a re-activation (S406) of the image forming apparatus which involves a state in which the extended application execution platform is not activated, or alternatively a stop (S1105) of the extended application execution platform so as to bring about the state in which the extended application execution platform is not activated; and
acquiring (S504, S1106) the backup data of the first data area and the second data area on the basis of detection (S503) of information that instructs backup of extended application of a plurality of types including the first extended application and the second extended application in the state in which the extended application execution platform is not activated.

9. A computer program comprising instructions which, when the program is executed by a computer, cause the computer to carry out the method as defined in claim 8.

10. A non-transitory storage medium on which is stored the computer program according to claim 9.

## Patentansprüche

1. Bilderzeugungsvorrichtung (100), die versehen ist mit einem Betriebssystem (200) zum Betreiben einer Ausführungsplattform (208) für erweiterte Anwendungen, um erweiterte Anwendungen (212) auszuführen, die zur Ausführungsplattform (208) für erweiterte Anwendungen hinzugefügt wurden, wobei eine erste erweiterte Anwendung eine Anwendung ist, die zur Ausführungsplattform für erweiterte Anwendungen hinzugefügt werden kann, um eine Funktion für die Bilderzeugungsvorrichtung bereitzustellen, und eine zweite erweiterte Anwendung eine Anwendung ist, die zur Ausführungsplattform für erweiterte Anwendungen hinzugefügt werden kann, um eine Funktion für die Bilderzeugungsvorrichtung bereitzustellen, wobei die Bilderzeugungsvorrichtung (100) umfasst:
einen Speicher (114) zum Speichern von Information; und
eine Steuereinheit (111, 204, 207), die konfiguriert ist, Sicherungsdaten der ersten erweiterten Anwendung und der zweiten erweiterten Anwendung zu erfassen;
**dadurch gekennzeichnet, dass**
der Speicher (114) einen ersten Datenbereich, in dem die Daten der ersten erweiterten Anwendung selbst gespeichert sind, und einen zweiten Datenbereich, in dem die zweite erweiterte Anwendung selbst gespeichert ist, umfasst; und
die Steuereinheit (207) eine erneute Aktivierung (S406) der Bilderzeugungsvorrichtung bewirkt, welche einen Zustand beinhaltet, in dem die Ausführungsplattform für erweiterte Anwendungen nicht aktiviert ist, oder alternativ ein Anhalten (S1105) der Ausführungsplattform für erweiterte Anwendungen bewirkt, um den Zustand herbeizuführen, in dem die Ausführungsplattform für erweiterte Anwendungen nicht aktiviert ist; und
die Steuereinheit (207) angepasst ist, die Sicherungsdaten des ersten Datenbereichs und des zweiten Datenbereichs basierend auf einer Detektion (S503) von Information zu erfassen (S504, S1106), die eine Sicherung einer erweiterten Anwendung mehrerer Typen einschließlich der ersten erweiterten Anwendung und der zweiten erweiterten Anwendung im Zustand, in dem die Ausführungsplattform für erweiterte Anwendungen nicht aktiviert ist, anweist.

2. Bilderzeugungsvorrichtung nach Anspruch 1, wobei:
bei einer erneuten Aktivierung der Bilderzeugungsvorrichtung die Steuereinheit detektiert, ob die Information, die eine Sicherung der erweiterten Anwendung anweist, erzeugt worden ist oder nicht, die Sicherungsdaten des ersten Datenbereichs und des zweiten Datenbereichs erfasst, falls die Information detektiert wird, die eine Sicherung der erweiterten Anwendung anweist, und danach die Ausführungsplattform für erweiterte Anwendungen aktiviert, und
die Ausführungsplattform für erweiterte Anwendungen konfiguriert ist, nachdem sie selbst aktiviert worden ist, eine jeweilige der mehreren zur Ausführungsplattform für erweiterte Anwendungen hinzugefügten erweiterten Anwendungen zu aktivieren.

3. Bilderzeugungsvorrichtung nach Anspruch 2, wobei:
die Steuereinheit beim Anhalten der Ausführungsplattform für erweiterte Anwendungen detektiert, ob die Information, die eine Sicherung der erweiterten Anwendung anweist, erzeugt worden ist oder nicht, die Sicherungsdaten des ersten Datenbereichs und des zweiten Datenbereichs erfasst, falls die Information detektiert wird, die eine Sicherung der erweiterten Anwendung anweist, und danach die Ausführungsplattform für erweiterte Anwendungen aktiviert, und
die Ausführungsplattform für erweiterte Anwendungen konfiguriert ist, nachdem sie selbst aktiviert worden ist, eine jeweilige der mehreren zur Ausführungsplattform für erweiterte Anwendungen hinzugefügten erweiterten Anwendungen zu aktivieren.

4. Bilderzeugungsvorrichtung nach Anspruch 1, wobei:
eine Sicherungswiederherstellungsanwendung die Wiederherstellungsfunktion durchführt durch Erzeugen von Information, die die Steuereinheit anweist, die Sicherungsdaten der erweiterten Anwendung mehrerer Typen einschließlich der ersten erweiterten Anwendung und der zweiten erweiterten Anwendung wiederherzustellen, und
eine erneute Aktivierung (S806) der Bilderzeugungsvorrichtung zu veranlassen, welche den Zustand beinhaltet, in dem die Ausführungsplattform für erweiterte Anwendungen nicht aktiviert ist, oder alternativ ein Anhalten (S1105) der Ausführungsplattform für erweiterte Anwendungen zu veranlassen, um den Zustand herbeizuführen, in dem die Ausführungsplattform für erweiterte Anwendungen nicht aktiviert ist; und
die Steuereinheit angepasst ist zum Wiederherstellen der Sicherungsdaten des ersten Datenbereichs und des zweiten Datenbereichs basierend auf einer Detektion (S903) der Information, die das Wiederherstellen der Sicherungsdaten der erweiterten Anwendung im Zustand, in dem die Ausführungsplattform für erweiterte Anwendungen nicht aktiviert ist, anweist.

5. Bilderzeugungsvorrichtung nach Anspruch 4, wobei:
bei einer erneuten Aktivierung der Bilderzeugungsvorrichtung die Steuereinheit detektiert, ob die Information, die das Wiederherstellen der Sicherungsdaten der erweiterten Anwendung anweist, erzeugt worden ist oder nicht, die Sicherungsdaten des ersten Datenbereichs in den ersten Datenbereich und des zweiten Datenbereichs in den zweiten Datenbereich wiederherstellt, falls die Information detektiert wird, die das Wiederherstellen der Sicherungsdaten der erweiterten Anwendung anweist, und danach die Ausführungsplattform für erweiterte Anwendungen aktiviert, und
die Ausführungsplattform für erweiterte Anwendungen konfiguriert ist, nachdem sie selbst aktiviert worden ist, eine jeweilige der mehreren zur Ausführungsplattform für erweiterte Anwendungen hinzugefügten erweiterten Anwendungen zu aktivieren.

6. Bilderzeugungsvorrichtung nach Anspruch 4, wobei:
die Steuereinheit beim Anhalten der Ausführungsplattform für erweiterte Anwendungen detektiert, ob die Information, die das Wiederherstellen der Sicherungsdaten der erweiterten Anwendung anweist, erzeugt worden ist oder nicht, die Sicherungsdaten des ersten Datenbereichs und des zweiten Datenbereichs wiederherstellt, falls die Information detektiert wird, die das Wiederherstellen der Sicherungsdaten der erweiterten Anwendung anweist, und danach die Ausführungsplattform für erweiterte Anwendungen aktiviert, und
die Ausführungsplattform für erweiterte Anwendungen konfiguriert ist, nachdem sie selbst aktiviert worden ist, eine jeweilige der mehreren zur Ausführungsplattform für erweiterte Anwendungen hinzugefügten erweiterten Anwendungen zu aktivieren.

7. Bilderzeugungsvorrichtung nach Anspruch 3, ferner umfassend:
eine Übertragungseinheit, die konfiguriert ist, eine Übertragung der erfassten Sicherungsdaten der ersten und zweiten Datenbereiche und eines Ausführungsergebnisses der Sicherung auszuführen,
wobei die Übertragungseinheit die Übertragung ausführt, nachdem die Ausführungsplattform für erweiterte Anwendungen und die erweiterte Anwendung aktiviert sind.

8. Steuerungsverfahren einer Bilderzeugungsvorrichtung, die mit einem Betriebssystem zum Betreiben einer Ausführungsplattform für erweiterte Anwendungen versehen ist, um erweiterte Anwendungen auszuführen, die zur Ausführungsplattform für erweiterte Anwendungen hinzugefügt wurden, wobei eine erste erweiterte Anwendung eine Anwendung ist, die zur Ausführungsplattform für erweiterte Anwendungen hinzugefügt werden kann, um eine Funktion für die Bilderzeugungsvorrichtung bereitzustellen, und eine zweite erweiterte Anwendung eine Anwendung ist, die zur Ausführungsplattform für erweiterte Anwendungen hinzugefügt werden kann, um eine Funktion für die Bilderzeugungsvorrichtung bereitzustellen, und die einen Speicher umfasst, der Informationen speichert, wobei das Steuerungsverfahren umfasst:
Erfassen von Sicherungsdaten der ersten erweiterten Anwendung und der zweiten erweiterten Anwendung;
**dadurch gekennzeichnet, dass**
der Speicher umfasst: einen ersten Datenbereich, in dem die Daten der ersten erweiterten Anwendung selbst gespeichert sind, und einen zweiten Datenbereich, in dem die zweite erweiterte Anwendung selbst gespeichert ist, und durch
Veranlassen einer erneuten Aktivierung (S406) der Bilderzeugungsvorrichtung, welche einen Zustand involviert, in dem die Ausführungsplattform für erweiterte Anwendungen nicht aktiviert ist, oder alternativ Veranlassen eines Anhaltens (S1105) der Ausführungsplattform für erweiterte Anwendungen, um den Zustand herbeizuführen, in dem die Ausführungsplattform zum Ausführen erweiterter Anwendungen nicht aktiviert ist; und
Erfassen (S504, S1106) der Sicherungsdaten des ersten Datenbereichs und des zweiten Datenbereichs basierend auf einer Detektion (S503) von Information, die in dem Zustand, in dem die Ausführungsplattform für erweiterte Anwendungen nicht aktiviert ist, eine Sicherung einer erweiterten Anwendung mehrerer Typen einschließlich der ersten erweiterten Anwendung und der zweiten erweiterten Anwendung anweist.

9. Computerprogramm, das Anweisungen umfasst, die bei Ausführen des Programms durch einen Computer den Computer veranlassen, das Verfahren nach Anspruch 8 auszuführen.

10. Nichtflüchtiges Speichermedium, auf dem das Computerprogramm nach Anspruch 9 gespeichert ist.

## Revendications

1. Appareil de formation d'images (100) doté d'un système d'exploitation (200) destiné à exploiter une plateforme d'exécution d'applications étendues (208) pour exécuter des applications étendues (212) qui ont été ajoutées à la plateforme d'exécution d'applications étendues (208), où une première application étendue est une application qui peut être ajoutée à la plateforme d'exécution d'applications étendues pour doter d'une fonction l'appareil de formation d'images et une deuxième application étendue est une application qui peut être ajoutée à la plateforme d'exécution d'applications étendues pour doter d'une fonction l'appareil de formation d'images, l'appareil de formation d'images (100) comprenant :
un dispositif de stockage (114) pour stocker des informations ; et
une unité de commande (111, 204, 207) configurée pour acquérir des données de sauvegarde de la première application étendue et de la deuxième application étendue ;
**caractérisé en ce que**
le dispositif de stockage (114) comprend une première zone de données dans laquelle sont stockées les données de la première application étendue elle-même, et une deuxième zone de données dans laquelle est stockée la deuxième application étendue elle-même ; et
l'unité de commande (207) déclenche une réactivation (S406) de l'appareil de formation d'images qui implique un état dans lequel la plateforme d'exécution d'applications étendues n'est pas activée, ou en variante un arrêt (S1105) de la plateforme d'exécution d'applications étendues de manière à déclencher l'état dans lequel la plateforme d'exécution d'applications étendues n'est pas activée ; et
l'unité de commande (207) est conçue pour acquérir (S504, 1106) les données de sauvegarde de la première zone de données et de la deuxième zone de données sur la base de la détection (S503) d'informations qui ordonnent la sauvegarde d'une application étendue d'une pluralité de types comprenant la première application étendue et la deuxième application étendue dans l'état dans lequel la plateforme d'exécution d'applications étendues n'est pas activée.

2. Appareil de formation d'images selon la revendication 1, dans lequel :
lors de la réactivation de l'appareil de formation d'images, l'unité de commande détecte si oui ou non les informations qui ordonnent la sauvegarde de l'application étendue ont été créées, acquiert les données de sauvegarde de la première zone de données et de la deuxième zone de données en cas de détection des informations qui ordonnent la sauvegarde de l'application étendue, et active ensuite la plateforme d'exécution d'applications étendues, et
la plateforme d'exécution d'applications étendues est configurée pour activer, après avoir été elle-même activée, chacune de la pluralité d'applications étendues ajoutées à la plateforme d'exécution d'applications étendues.

3. Appareil de formation d'images selon la revendication 2, dans lequel :
lors dudit arrêt de la plateforme d'exécution d'application étendue, l'unité de commande détecte si oui ou non les informations qui ordonnent la sauvegarde de l'application étendue ont été créées, acquiert les données de sauvegarde de la première zone de données et de la deuxième zone de données dans un cas de détection des informations qui ordonnent la sauvegarde de l'application étendue, et active ensuite la plateforme d'exécution d'applications étendues, et
la plateforme d'exécution d'applications étendues est configurée pour activer, après avoir été elle-même activée, chacune de la pluralité d'applications étendues ajoutées à la plateforme d'exécution d'applications étendues.

4. Appareil de formation d'images selon la revendication 1, dans lequel :
une application de restauration de sauvegarde exécute la fonction de restauration en créant des informations qui ordonnent à l'unité de commande de restaurer les données de sauvegarde de l'application étendue d'une pluralité de types comprenant la première application étendue et la deuxième application étendue, et
de déclencher une réactivation (S806) de l'appareil de formation d'images qui implique l'état dans lequel la plateforme d'exécution d'applications étendues n'est pas activée, ou en variante un arrêt (S1105) de la plateforme d'exécution d'applications étendues de manière à déclencher l'état dans lequel la plateforme d'exécution d'applications étendues n'est pas activée ; et
l'unité de commande est conçue pour restaurer les données de sauvegarde de la première zone de données et de la deuxième zone de données sur la base de la détection (S903) des informations qui ordonnent de restaurer les données de sauvegarde de l'application étendue dans l'état dans lequel la plateforme d'exécution d'applications étendues n'est pas activée.

5. Appareil de formation d'images selon la revendication 4, dans lequel :
lors de la réactivation de l'appareil de formation d'images, l'unité de commande détecte si oui ou non les informations qui ordonnent de restaurer les données de sauvegarde de l'application étendue ont été créées, restaure les données de sauvegarde de la première zone de données dans la première zone de données et de la deuxième zone de données dans la deuxième zone de données dans un cas de détection des informations qui ordonnent de restaurer les données de sauvegarde de l'application étendue, et active ensuite la plateforme d'exécution d'applications étendues, et
la plateforme d'exécution d'applications étendues est configurée pour activer, après avoir été elle-même activée, chacune de la pluralité d'applications étendues ajoutées à la plateforme d'exécution d'applications étendues.

6. Appareil de formation d'images selon la revendication 4, dans lequel :
lors dudit arrêt de la plateforme d'exécution d'applications étendues, l'unité de commande détecte si oui ou non les informations qui ordonnent de restaurer les données de sauvegarde d'applications étendues ont été créées, restaure les données de sauvegarde de la première zone de données et de la deuxième zone de données dans un cas de détection des informations qui ordonnent de restaurer les données de sauvegarde de l'application étendue, et active ensuite la plateforme d'exécution d'applications étendues, et
la plateforme d'exécution d'applications étendues est configurée pour activer, après avoir été elle-même activée, chacune de la pluralité d'applications étendues ajoutées à la plateforme d'exécution d'applications étendues.

7. Appareil de formation d'images selon la revendication 3, comprenant en outre :
une unité de transmission configurée pour exécuter une transmission des données de sauvegarde acquises des première et deuxième zones de données et un résultat d'exécution de la sauvegarde,
dans lequel l'unité de transmission exécute la transmission après que la plateforme d'exécution d'applications étendues et l'application étendue ont été activées.

8. Procédé de commande d'un appareil de formation d'images doté d'un système d'exploitation destiné à exploiter une plateforme d'exécution d'applications étendues pour exécuter des applications étendues qui ont été ajoutées à la plateforme d'exécution d'applications étendues, où une première application étendue est une application qui peut être ajoutée à la plateforme d'exécution d'applications étendues pour doter d'une fonction l'appareil de formation d'images et une deuxième application étendue est une application qui peut être ajoutée à la plateforme d'exécution d'applications étendues pour doter d'une fonction l'appareil de formation d'images, et comprenant un dispositif de stockage qui stocke des informations, le procédé de commande comprenant l'étape consistant en :
l'acquisition de données de sauvegarde de la première application étendue et de la deuxième application étendue ;
**caractérisé en ce que**
le dispositif de stockage comprend une première zone de données dans laquelle sont stockées les données de la première application étendue elle-même, et une deuxième zone de données dans laquelle est stockée la deuxième application étendue elle-même ; et par les étapes consistant en
le déclenchement d'une réactivation (S406) de l'appareil de formation d'images qui implique un état dans lequel la plateforme d'exécution d'applications étendues n'est pas activée, ou en variante un arrêt (S1105) de la plateforme d'exécution d'applications étendues de manière à déclencher l'état dans lequel la plateforme d'exécution d'applications étendues n'est pas activée ; et
l'acquisition (S504, S1106) des données de sauvegarde de la première zone de données et de la deuxième zone de données sur la base de la détection (S503) d'informations qui ordonnent la sauvegarde d'une application étendue d'une pluralité de types comprenant la première application étendue et la deuxième application étendue dans l'état dans lequel la plateforme d'exécution d'applications étendues n'est pas activée.

9. Programme informatique comprenant des instructions qui, lorsque le programme est exécuté par un ordinateur, amènent l'ordinateur à mettre en œuvre le procédé selon la revendication 8.

10. Support de stockage non transitoire sur lequel est stocké le programme informatique selon la revendication 9.
